# EUROPÄISCHE PATENTSCHRIFT

(11) **EP 1 932 412 B1**
(45) Veröffentlichungstag und Bekanntmachung des Hinweises auf die Patenterteilung: **25.09.2013**
(21) Anmeldenummer: 07023390.3
(22) Anmeldetag: 04.12.2007
(51) Int. Cl.: A01B 71/06, A01D 41/14

(54) **Landwirtschaftliche Maschine**
Agricultural machine
Machine agricole

(30) Priorität: 15.12.2006 DE 102006059842
(43) Veröffentlichungstag der Anmeldung: 18.06.2008
(73) Patentinhaber: CLAAS Saulgau GmbH, 88348 Bad Saulgau (DE)
(72) Erfinder: Boll, Ulrich, 88348 Bad Saulgau (DE)
(74) Vertreter: Roth, Klaus

(56) Entgegenhaltungen:
- EP-A- 0 503 233
- EP-A- 1 169 906
- EP-A- 1 440 617
- FR-A- 2 781 118
- GB-A- 1 275 492
- US-A- 4 409 780

## Beschreibung

Die Erfindung betrifft eine landwirtschaftliche Maschine, insbesondere zum Frontanbau an einem landwirtschaftlichen Fahrzeug nach dem Oberbegriff des Anspruchs 1.

Zum Frontanbau an landwirtschaftlichen Fahrzeugen sind unterschiedliche landwirtschaftliche Maschinen in Gebrauch. Vielfach weisen derartige Maschinen verschiedene Arbeitseinheiten auf, die zwischen einer breiten Arbeitsstellung und einer schmaleren Transportstellung verstellbar ausgebildet sind. Die Druckschrifte DE 43 22 236 B4 GB 1275492, US 4409780 und FR 2 781 118 zeigen beispielsweise derartige Mähwerke mit einer zentralen Frontmäheinheit und zwei Seitenmäheinheiten.

Bei derartigen Maschinen wie dem genannten Stand der Technik wird die zentrale Fronteinheit mittels einer üblicherweise an landwirtschaftlichen Fahrzeugen vorgesehenen Fronthydraulik angehoben und die Seiteneinheiten um eine oder mehrere Schwenkachsen in die Transportstellung eingeschwenkt. Bei Schwenkbewegungen, wie z.B. die beim Anheben der Frontarbeitseinheit, ist der Antriebsschluss über eine Gelenkwelle und ein oder mehrere Verteilergetriebe unproblematisch, da die Gelenkwelle im Wesentlichen die Schwenkbewegungen der entsprechenden Schwinge ohne nennenswerte Längenänderung durchführen kann.

Bei Arbeitseinheiten, die gegenüber ihrer Antriebsquelle einer translatorischen Bewegung, dass heißt einer Verschiebung unterliegen, ist dies in herkömmlicher Weise nicht möglich. Bei einer üblicherweise vorgesehenen Gelenkwelle, die sich von der Antriebsquelle direkt zur Arbeitseinheit hin in Fahrtrichtung erstreckt, müsste die Gelenkwelle den kompletten Versatz der Arbeitseinheit Längenvariabel ausgleichen können. Dies ist bei entsprechend großen Relativbewegungen und vor allem bei dicht am Fahrzeug angebrachten Arbeitseinheiten, die in Fahrtrichtung nur sehr kurze Gelenkwellen zulassen nicht möglich.

Aufgabe der Erfindung ist es dementsprechend, eine landwirtschaftliche Maschine vorzuschlagen, bei der dieser Nachteil behoben ist.

Diese Aufgabe wird durch die Merkmale des Anspruchs 1 gelöst.

Durch die in den Unteransprüche genannten Maßnahmen sind vorteilhafte Ausführungen und Weiterbildungen der Erfindung möglich.

Dementsprechend zeichnet sich eine erfindungsgemäße Ausführung einer landwirtschaftliche Maschine durch eine quer zur Verschieberichtung und quer zur vorgesehenen Fahrtrichtung angeordnete längenvariable Gelenkwelle aus.

Durch diese Maßnahme kann eine Verschiebebewegung der Arbeitseinheit realisiert werden, wobei der Antrieb über eine Gelenkwelle geschlossen werden kann. Die Queranordnung der Gelenkwelle bezüglich der Fahrtrichtung ermöglicht die Verwendung einer erheblich längeren Gelenkwelle, als dies bei einem direkten Kraftschluss zwischen Arbeitseinheit und Antriebsquelle in Verschiebrichtung möglich wäre. Durch die Anordnung quer zur Verschieberichtung wird verhindert, dass die Gelenkwelle in Verschiebrichtung nur teleskopartig angezogen wird. Vielmehr folgt die Längenänderung der quer zur Verschiebrichtung angeordneten Gelenkwelle bei der Verschiebebewegung der Arbeitseinheit einer Winkelfunktion so das die erforderliche relative Längenänderung, d.h. das Längenverhältnis bei ausgezogener Gelenkwelle und eingefahrener Gelenkwelle deutlich kleiner gehalten werden kann.

Diese Vorteile sind bereits bei einer Queranordnung der Gelenkwelle zu erzielen, bei der die Gelenkwelle nur schräg, d.h. unter einem Winkel kleiner 90° zur verschieberichtung der Arbeitseinheit angeordnet ist. Besonders vorteilhaft kommt die Wirkung jedoch dann zum Tragen, wenn in der Ausgangsstellung die Gelenkwelle soweit als möglich rechtwinklig zur Verschieberichtung bzw. nahezu parallel zur Arbeitseinheit steht.

Weiterhin ist es von Vorteil, eine möglichst lange Gelenkwelle bereits im eingefahrenen Zustand zu verwenden, da hierdurch große Verschiebewege der Arbeitseinheit bei vergleichsweise kleiner relativen Längenänderung der Gelenkwelle realisierbar sind. Die Gelenkwelle schwenkt dabei während der Verschiebung der Arbeitseinheit um ihren endseitigen Ruhepunkt, während sie ausgefahren wird. Eine möglichst lange Gelenkwelle lässt sich beispielsweise dadurch erzielen, dass die Antriebsquelle auf einer Seite der Mittelachse der Arbeitseinheit angebracht ist und sich die Gelenkwelle auf die andere Seite hin der Mittelachse bezogen auf die Verschieberichtung erstreckt.

Bei Arbeitseinheiten, die als Frontarbeitseinheit vor einem landwirtschaftlichen Fahrzeug angebracht sind, entspricht die Arbeitsbreite derartiger Arbeitseinheiten in der Regel der Transportbreite und häufig auch der Breite des zugehörigen Fahrzeugs, so dass die maximale Transport- und Arbeitsbreite genutzt wird. Bei einer solchen Arbeitseinheit wird dementsprechend die zugehörige Gelenkwelle quer zur Fahrtrichtung und sich über die Mittelachse des zugehörigen Fahrzeugs erstreckend angeordnet.

Die erfindungsgemäßen Vorteile lassen sich weiter steigern, indem eine zweite, an die erste Gelenkwelle gekoppelte Gelenkwelle vorgesehen ist, die sich von der Abtriebsseite der ersten Gelenkwelle zur Antriebsquelle zurück erstreckt. Es ergibt sich somit gewissermaßen eine Zickzackanordnung bzw. eine gefaltete Anordnung zweier Gelenkwellen. Dies kann zum Einen dazu verwendet werden, um für die zweite Gelenkwelle einen optimalen Ausgangspunkt, z.B. weit von der Mittelachse der Arbeitseinheit entfernt, zu finden und die zweite Gelenkwelle mit größerer Länge ausbilden zu können.

Ein anderer Vorteil bei einer solchen Anordnung ergibt sich dann, wenn der Anschlusspunkt der beiden Gelenkwellen in Verschieberichtung mitwandern kann. In diesem Fall kann in einer Art Ziehharmonikaeffekt die Längenvariabilität beider Gelenkwellen für die Verschiebebewegung der Arbeitseinheit genutzt werden.

Vorzugsweise werden zwei derartige Gelenkwellen über ein Getriebe gekoppelt. Ein solches Getriebe kann fest montiert sein oder aber zur Erzielung eines Ziehharmonikaeffekts wie oben beschrieben in Verschieberichtung der Arbeitseinheit verschieblich sein, wozu in diesem Fall entsprechende Führungselemente oder dergleichen je nach Bedarf vorzusehen sind.

Die Erfindung ist besonders vorteilhaft bei einer landwirtschaftlichen Maschine einsetzbar, bei der eine linear hubfähige Arbeitseinheit vorgesehen ist. Wie bereits eingangs erwähnt werden hubfähige Arbeitseinheiten bei landwirtschaftlichen Maschinen in der Regel über Schwingen des entsprechenden landwirtschaftlichen Fahrzeugs in einer Schwenkbewegung um eine horizontale Schwenkachse angehoben bzw. abgesenkt. In diesem Fall ist es aufgrund der gleichbleibenden Länge der Schwinge relativ problemlos, den Antrieb über eine in Richtung einer solchen Schwinge sich erstreckende Gelenkwelle herzustellen. Erfindungsgemäß kann jedoch nunmehr auch eine linear hubfähige Arbeitseinheit antriebsmäßig angeschlossen werden, die über ein entsprechendes Hubsystem verfügt. Die hubfähige Arbeitseinheit wird bei einer solchen Maschine gewissermaßen in einer Art Lift vor dem Fahrzeug angehoben. Eine solche Anordnung hat den Vorteil dass die Arbeitseinheit sehr nahe am landwirtschaftlichen Fahrzeug angeordnet werden kann.

Eine derartige Maschine bietet insbesondere als Erntemaschine entsprechende Vorteile, beispielsweise als Mähmaschine oder Maschine zum Aufnehmen von am Boden liegenden Erntegut.

Neben der vorbeschriebenen Lösung der oben genannten Aufgabe wird erfindungsgemäß noch ein zweiter Weg dahingehend vorgeschlagen, dass die Antriebsquelle eine in die Verschieberichtung gerichtete Antriebswelle aufweist und eine lösbare Kupplung zwischen der Arbeitseinheit und der Antriebsquelle vorgesehen ist.

Diese Lösung kann dann verwendet werden, wenn die Arbeitsstellung bei geschlossener Kupplung, dass heißt bei minimalem Abstand zwischen Arbeitseinheit und Antriebsquelle vorliegt und die Transportstellung in weggeschobenem beispielsweise angehobenem Zustand der Arbeitseinheit gegeben ist. Die Verwendung einer lösbaren Kupplung bietet den Vorteil, dass ein sehr kompakter Antriebsstrang zwischen Antriebsquelle und Arbeitseinheit vorliegt und dabei ein sehr großer Verschiebeweg, beispielsweise ein sehr großer Hub ohne Probleme beim Antriebschluss möglich ist.

Zur Realisierung einer solchen lösbaren Erfindung wird vorzugsweise eine Klauenkupplung verwendet, die einen zuverlässigen verschleißfreien Kraftschluss bietet, leicht lösbar und wieder schließbar ist und darüber hinaus je nach Anordnung auch noch die Möglichkeit einer definierten Winkelstellung zwischen An- und Abtriebswelle der Kupplung bietet.

Die Möglichkeit, die Winkelstellung definiert vorzugeben ist je nach Anwendungsfall bei einer lösbaren Kupplung von besonderer Bedeutung, um die daran angeschlossenen Arbeitswerkzeuge synchron und in definierter Phasenlage zu betreiben. Eine solche definierte Winkellage beim Schließen der Kupplung herzustellen ist somit auch bei erfindungsgemäßer Verwendung anderweitiger lösbarer Kupplungen von Vorteil.

Vorzugsweise wird die lösbare Kupplung so ausgebildet, dass die Verschiebebewegung der Arbeitseinheit selbsttätig lösbar und/oder selbsttätig schließbar ist. Hierdurch erübrigt sich eine entsprechende Betätigungsvorrichtung bzw. eine entsprechende Steuervorrichtung. Eine selbsttätig arbeitende Kupplung kann beispielsweise wiederum durch eine Klauenkupplung verwirklicht werden, die problemlos selbsttätig zu öffnen ist und beim Schließen durch ein Kraftelement, beispielsweise eine Druckfeder druckbeaufschlagt wird, so dass sie beim Drehen der Antriebswelle einrastet.

Selbstverständlich kann eine solche lösbare Kupplung auch ansteuerbar ausgebildet sein, was je nach Anwendungsfall wiederum Vorteile bilden kann. So kann beispielsweise über eine ansteuerbare Kupplung die angeschlossene Arbeitseinheit separat gesteuert, insbesondere auch separat gestartet und gestoppt werden.

Ein Ausführungsbeispiel der Erfindung ist in der Zeichnung dargestellt und wird anhand der Erfindung der Figuren nachfolgend näher erläutert.

Im Einzelnen zeigen
- Figur 1: eine Frontansicht eines sogenannten Feldhäckslers mit dreiteiliger Aufnahmevorrichtung in Arbeitsstellung,
- Figur 2: eine Frontansicht eines Feldhäckslers gemäß Figur 1 in einer Übergangsstellung in der Aufnahmevorrichtung für einen Übergang in die Transportstellung,
- Figur 3: eine Draufsicht von oben auf einen Feldhäcksler in der Übergangsstellung gemäß Figur 2,
- Figur 4: eine Seitenansicht auf einen Feldhäcksler mit dreiteiliger Aufnahmevorrichtung in Transportstellung,
- Figur 5: eine Frontansicht auf einen Feldhäcksler gemäß Figur 4 in Transportstellung,
- Figur 6: eine perspektivische Darstellung des Antriebs für die dreiteilige Aufnahmevorrichtung in Arbeitsstellung und
- Figur 7: eine perspektivische schematische Darstellung des Antriebsstrangs für eine dreiteilige Aufnahmevorrichtung in Transportstellung.

Die Erfindung wird anhand der Figuren anhand eines Feldhäckslers 1 beschrieben, der eine dreiteilige Aufnahmevorrichtung 2 im Frontanbau trägt. Derartige Aufnahmevorrichtungen 2 werden regelmäßig in Fachkreisen als sogenannte Pick-Up bezeichnet.

Die dargestellte Aufnahmevorrichtung 2 besteht aus einer linear hubfähigen zentralen Mitteleinheit 3 und zwei schwenkbaren Seiteneinheiten 4, 5. Die hubfähige Mitteleinheit 3 stellt somit eine erfindungsgemäße durch translatorische oder lineare Verschiebung verschiebbare d.h. anhebbare Arbeitseinheit dar.

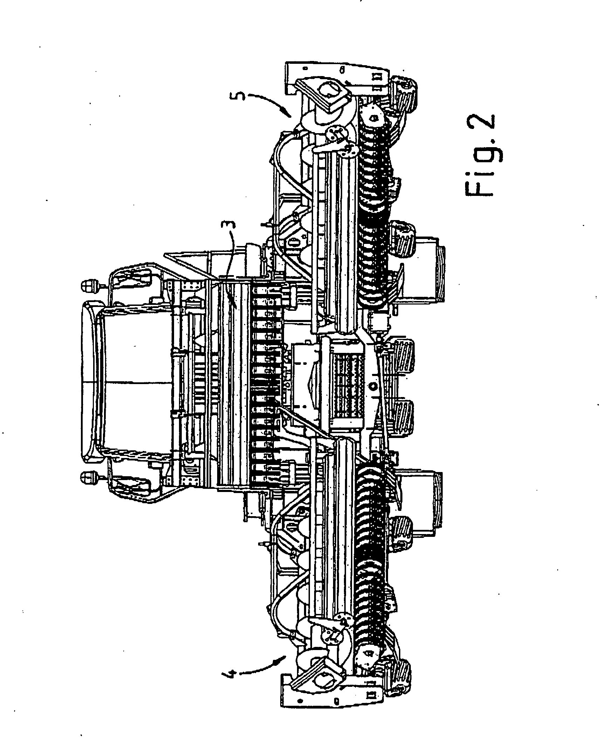

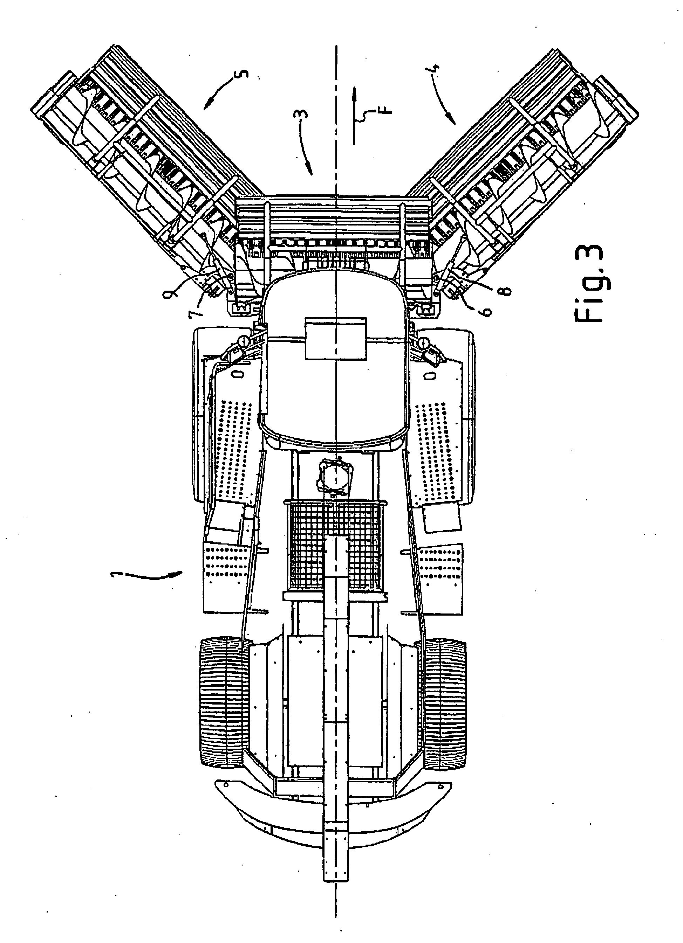

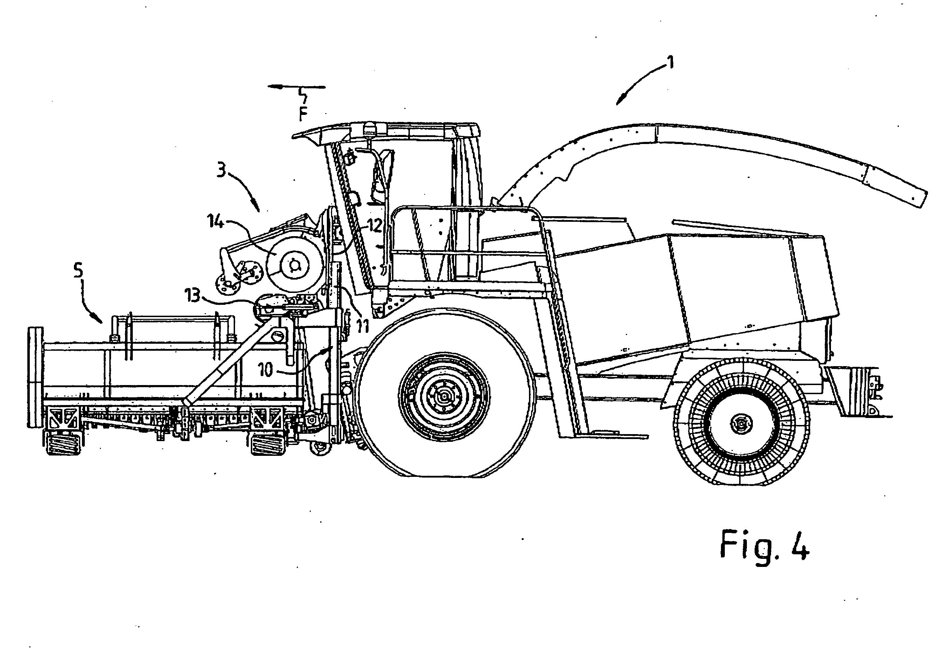

Figur 2 zeigt den Übergang in die Transportstellung, wobei die Mitteleinheit 3 so weit in einer gradlinigen Hubbewegung angehoben ist, dass die beiden Seiteneinheiten 4, 5 in einer Schwenkbewegung um im Wesentlichen vertikal stehende Schwenkachsen 6, 7 (vergleiche Figur 3) mittels entsprechender Stellorgane, beispielsweise Arbeitszylinder 8, 9 unterhalb der Mitteleinheit 3 nach vorne in Fahrtrichtung F verschwenkt werden können. Figur 4 zeigt die Transportstellung, wobei die Mitteleinheit 3 vollständig angehoben ist und die Seiteneinheiten in Fahrtrichtung F nach vorne geschwenkt sind. In der Seitenansicht gemäß Figur 4 ist dabei nur die Seiteneinheit 5 erkennbar.

In Figur 4 ist das Hubsystem 10 mit Vertikalsäule 11 erkennbar, durch das die Mitteleinheit 3 vertikal linear anhebbar ist. Die Mitteleinheit 3 ist mit einem Hubschlitten 12 in der Vertikalsäule geführt. Das Huborgan selbst ist nicht erkennbar, kann jedoch in unterschiedlicher Ausführung vorgesehen werden, beispielsweise als Hubzylinder, als Spindelantrieb, usw.

In Figur 4 ist weiterhin erkennbar, dass die Mitteleinheit 3 einen unteren Aufnahmerotor 13 aufweist, der mittels nicht näher erkennbarer Aufnahme- und Förderzinken in Arbeitsstellung am Boden liegendes Erntegut aufnehmen kann und dieses in den Wirkungsbereich einer Querförderschnecke 14 fördert.

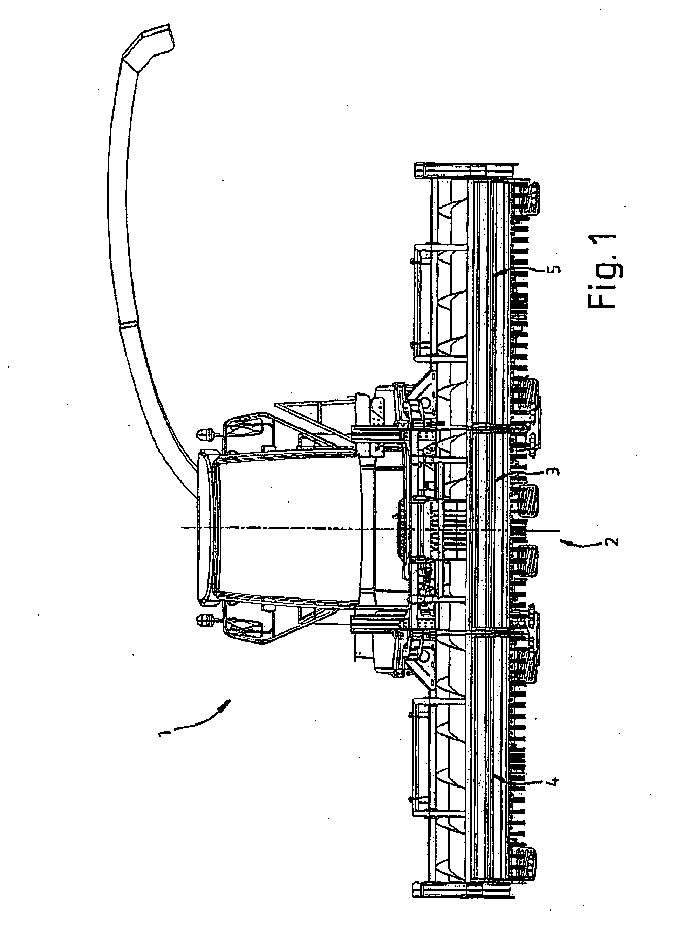

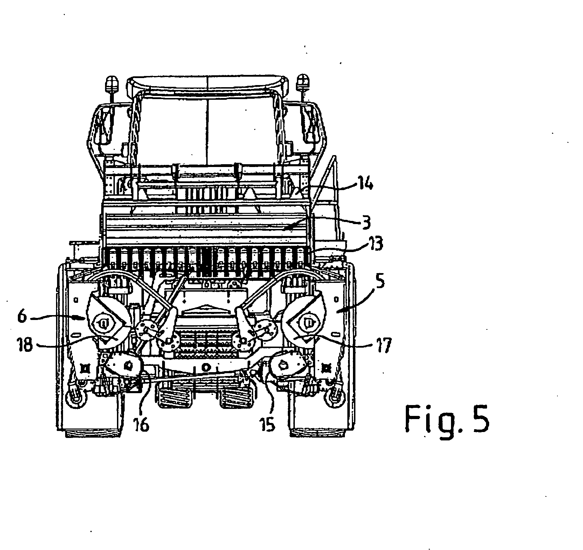

Die Seiteneinheiten 4, 5 sind entsprechend aufgebaut. In Figur 5 sind die zugehörigen Aufnahmerotoren 15, 16 sowie die entsprechenden Querförderschnecken 17, 18 gut erkennbar. Mittels der Aufnahmerotoren 13, 15, 16 wird am Boden liegendes Erntegut über die gesamte Arbeitsbreite (vgl. Figur 1) aufgenommen und anschließend mittels der Querförderschnecken 14, 17, 18 einem zentralen Aufnahmeschacht des Feldhäckslers 1 zugeführt.

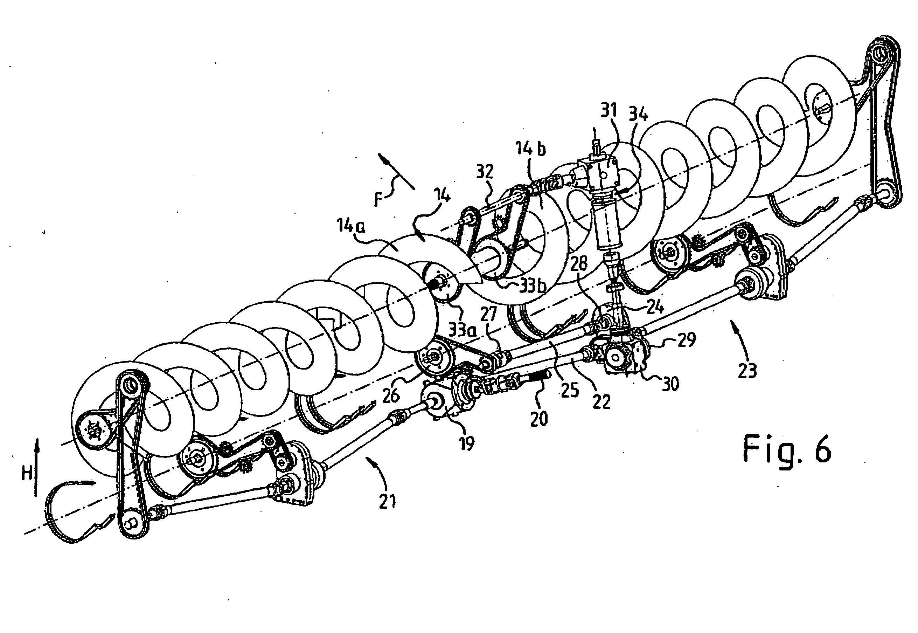

Figur 6 zeigt den Antrieb der Aufnahmevorrichtung 2, wobei über ein zentrales Verteilergetriebe 19 die Antriebskraft eines im Fahrzeug befindlichen Motors der Aufnahmevorrichtung 2 zugeführt wird. Eine Antriebswelle 20 kann hierzu beispielsweise mittels einer üblichen Gelenkwelle mit einer Zapfwelle des Fahrzeugs, dass heißt des Feldhäckslers 1 verbunden werden.

Ein Seitenstrang 21, der vom Verteilergetriebe 19 abzweigt, dient dazu, sowohl den Förderrotor als auch die Querförderschnecke der Seiteneinheit 5 anzutreiben.

In die andere Richtung zweigt vom Verteilergetriebe 19 eine Gelenkwelle 22 ab, über die unter anderem der rechte Seitenstrang 23 für den Antrieb der rechten Seiteneinheit 4 mit Aufnahmerotor und Querförderschnecke angetrieben wird.

Über ein Transmissionsgetriebe 24 wird eine längenvariable Gelenkwelle 25 angetrieben, die im Wesentlichen parallel zur Gelenkwelle 22 verläuft. Die längenvariable Gelenkwelle 25 dient über ein Transmissionsgetriebe 26 dem Antrieb des Aufnahmerotors 13 der Mitteleinheit 3. Dementsprechend ist Transmissionsgetriebe 26 und somit auch das abtriebsseitige Ende 27 der längenvariablen Gelenkwelle 25 in der Hubbewegung der Mitteleinheit 3 in Richtung H anhebbar.

Ersichtlich liegt die Gelenkwelle 25 sowohl quer zur Hubrichtung H als auch quer zur Fahrtrichtung F.

Durch die Anordnung quer zur Hubrichtung H kann zwischen der Abtriebsseite 27 und der Antriebsseite 28 der erforderliche Hub durch Längenvariabilität der Gelenkwelle 25 überbrückt werden. Durch die Anordnung quer zur Fahrtrichtung F ist dabei zugleich eine Position der Mitteleinheit 3 in unmittelbarer Nähe zu dem Verteilergetriebe 19 bzw. dem Transmissionsgetriebe 24 im querverlaufenden Antriebsstrang möglich.

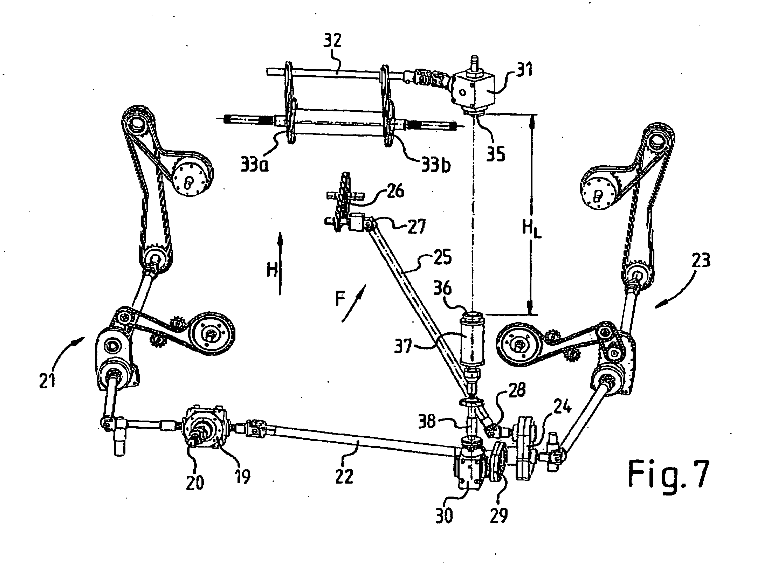

Figur 7 zeigt den Antriebsstrang bei angehobener Mitteleinheit 3. Das Transmissionsgetriebe 26 für den Antrieb des Aufnahmerotors 13 der Mitteleinheit 3 ist hierbei angehoben, während die längenvariable Gelenkwelle 25 nach oben geschwenkt und ausgezogen ist.

Eine in dieser Ausführungsvariante nicht realisierte Variante könnte darin bestehen, dass auch die Gelenkwelle 22 mit dem Transmissionsgetriebe 24 nach oben mit Richtung H anhebbar und zugleich längenausziehbar wäre. Hierdurch könnte über zwei gegensinnig ausgerichtete Gelenkwellen mit vergleichsweise geringen Längenauszug eine große Hubhöhe überbrückt werden. Diese Variante könnte gewissermaßen zickzackförmig oder ziehharmonikaförmig weiter ausgebaut werden.

Im vorliegenden Ausführungsbeispiel ist jedoch nur eine längenvariable Gelenkwelle 25 vorgesehen, die erfindungsgemäß quer zur verschieberichtung und zudem quer zur Fahrtrichtung F angeordnet ist, um den gradlinigen Hub der Mitteleinheit 3 gegenüber dem Antriebsstrang zu überbrücken.

In diesem Fall ist eine Gelenkwelle 25 mit entsprechend großen Längenauszug zu wählen. Dafür verwendbare Gelenkwellen sind beispielsweise unter dem Handelsnamen Telespace-Gelenkwelle erhältlich.

Die zweite erfindungsgemäße Variante, den Antrieb einer translatorisch verstellbaren Arbeitseinheit in der beschriebenen Ausführung der Aufnahmevorrichtung 2 mit der Mitteleinheit 3 zu realisieren, ist in Figuren 6 und 7 anhand des Antriebs der Förderschnecke 14 ebenfalls erkennbar. Hierzu ist vor dem Transmissionsgetriebe 24 ein weiteres Transmissionsgetriebe 29 mit anschließendem Winkelgetriebe 30 vorgesehen. Das Winkelgetriebe 30 bildet dabei die Antriebsquelle für ein darüber angeordnetes weiteres Winkelgetriebe 31, an das die Gelenkwelle 32 für den Antrieb der Querförderschnecke 14 angeschlossen ist.

Die Querförderschnecke 14 ist im übrigen zweiteilig beidseitig des Einzugsschachts als Schnecke 14a und 14b aufgebaut und wird somit über zwei Transmissionsgetriebe 33a, b angetrieben.

Zwischen der Antriebsquelle 30 und dem Antrieb 31 der Querförderschnecke 14 ist nunmehr erfindungsgemäß eine Klauenkupplung 34 angeordnet, die in Arbeitsstellung gemäß Figur 6 geschlossen in Transportstellung gemäß Figur 7 jedoch gelöst ist. Die beiden Klauen 35, 36 lösen sich beim Anheben in Hubrichtung H problemlos selbsttätig. Beim Schließen der Klauenkupplung 34 können bei entsprechender Winkelorientierung die Klauen 35, 36 unter Umständen ebenfalls problemlos selbstständig ineinander rasten. Die Winkellage der Klauen 35, 36 ist bei einem Schneckenantrieb wie dargestellt ohne Bedeutung.

Bei verdrehter Winkelstellung, in der die Klauen nicht direkt einrasten, sind unterschiedliche Möglichkeiten denkbar, die Klauenkupplung zu schließen. Neben einer Zwangsführung zur Herstellung der zum Einrasten richtigen Winkelorientierung kann wie im beschriebenem Ausführungsbeispiel realisiert auch eine der beiden Klauen, vorliegend die Klaue 36 gegen ein Kraftglied verschiebbar ausgebildet sein. Vorliegend kann beispielsweise die Klaue 36 mit ihrem Schaft in die Federhülse 37 eingedrückt werden, wobei der Gegendruck einer nicht näher dargestellten, in der Federhülse 37 angeordneten Druckfeder zu überwinden ist. Sofern die Klauen 35, 36 in nicht rastender Stellung aufeinandergedrückt werden, rasten diese bei Betätigung des Antriebs durch Drehen der zentralen Antriebswelle 20 selbsttätig ein, sobald die passende Winkelstellung erreicht ist.

Über eine derartige Klauenkupplung 34 kann eine translatorisch verschiebbare Arbeitseinheit wie die Mitteleinheit 3 an einem Antriebsstrang angeschlossen werden, wobei eine große Hublänge H_{L} überbrückbar ist. Hierbei wird die Antriebswelle 38 für das Getriebe 31, die im dargestellten Ausführungsbeispiel die Abtriebswelle des Winkelgetriebes 30 ist, in Hubrichtung H angeordnet und an die Klauenkupplung 34 angeschlossen.

In der dargestellten Ausführungsvariante einer landwirtschaftlichen Maschine in Form der Aufnahmevorrichtung 2 sind somit beide erfindungsgemäßen Varianten zum Anschluss einer translatorisch bewegbaren Arbeitseinheit realisiert. Diese Ausführung ist besonders vorteilhaft, wenn die Antriebsquellen 24, 30 für beide Varianten der Hubüberbrückung identisch oder unmittelbar beieinander angeordnet sind, da auf dieser Weise ausgehend vom gleichem Ort eine Kraftübertragung zu voneinander beabstandeten Positionen vorgesehen werden kann.

### Bezugszeichenliste:

- 1: Feldhäcksler
- 2: Aufnahmevorrichtung
- 3: Mitteleinheit
- 4: Seiteneinheit
- 5: Seiteneinheit
- 6: Schwenkachse
- 7: Schwenkachse
- 8: Arbeitszylinder
- 9: Arbeitszylinder
- 10: Hubsystem
- 11: Vertikalsäule
- 12: Hubschlitten
- 13: Aufnahmerotor
- 14: Querförderschnecke
- 15: Aufnahmerotor
- 16: Aufnahmerotor
- 17: Querförderschnecke
- 18: Querförderschnecke
- 19: Verteilergetriebe
- 20: Antriebswelle
- 21: Seitenstrang
- 22: Gelenkwelle
- 23: Seitenstrang
- 24: Transmissionsgetriebe
- 25: längenvariable Gelenkwelle
- 26: Transmissionsgetriebe
- 27: Abtriebsseite
- 28: Antriebsseite
- 29: Transmissionsgetriebe
- 30: Winkelgetriebe
- 31: Winkelgetriebe
- 32: Gelenkwelle
- 33: Transmissionsgetriebe
- 34: Klauenkupplung
- 35: Klaue
- 36: Klaue
- 37: Federhülse
- 38: Antriebswelle

## Patentansprüche

1. Landwirtschaftliche Maschine, insbesondere zum Frontanbau an ein landwirtschaftliches Fahrzeug, mit wenigstens einer Arbeitseinheit (2, 3), die gegenüber einer Antriebsquelle (30) verschiebbar ist, **dadurch gekennzeichnet, dass** die verschiebbare Arbeitseinheit (2, 3) durch translatorische oder lineare Bewegung zwischen einer Transportstellung und einer Arbeitsstellung verschiebbar und als linear hubfähige, zentrale Mitteleinheit (3) ausgebildet ist, wobei zwei schwenkbare Seiteneinheiten (4, 5) vorgesehen sind, und dass zum Überbrücken der translatorischen oder linearen Bewegung der Arbeitseinheit (2, 3) zwischen einer Transportstellung und einer Arbeitsstellung einerseits die Antriebsquelle (30) eine Antriebswelle (38) in Verschieberichtung (H) der Arbeitseinheit (2, 3) aufweist sowie eine lösbare Kupplung (34) zwischen Arbeitseinheit (2, 3) und Antriebsquelle (30) vorgesehen ist und andererseits eine quer zur vorgesehenen Fahrtrichtung (F) angeordnete, längenvariable Gelenkwelle (25) vorgesehen ist.

2. Maschine nach Anspruch 1, **dadurch gekennzeichnet, dass** die Antriebsquelle seitlich der Mittelachse der Antriebseinheit (24) vorgesehen ist und sich die Gelenkwelle (25) auf die der Antriebsquelle (24) gegenüberliegenden Seite der Mittelachse erstreckt.

3. Maschine nach einem der vorgenannten Ansprüche, **dadurch gekennzeichnet, dass** eine zweite, die erste Gelenkwelle gekoppelte Gelenkwelle vorgesehen ist, die sich zur Seite der Antriebsquelle zurück erstreckt.

4. Maschine nach einem der vorgenannten Ansprüche **dadurch gekennzeichnet, dass** beide Gelenkwellen über ein Getrieb gekoppelt sind.

5. Maschine nach einem der vorgenannten Ansprüche **dadurch gekennzeichnet, dass** das Getriebe während der Verschiebung der Arbeitseinheit verschiebbar ist.

6. Maschine nach einem der vorgenannten Ansprüche **dadurch gekennzeichnet, dass** die Arbeitseinheit (2) hubfähig ist.

7. Maschine nach einem der vorgenannten Ansprüche **dadurch gekennzeichnet, dass** die Maschine eine Erntemaschine ist.

8. Maschine nach einem der vorgenannten Ansprüche **dadurch gekennzeichnet, dass** die Maschine eine Aufnahmevorrichtung (2) für am Boden liegendes Erntegut ist.

9. Maschine nach einem der vorgenannten Ansprüche, **dadurch gekennzeichnet, dass** die verschiebbare Arbeitseinheit (2) eine linear hubfähige, zentrale Fronteinheit ist.

10. Maschine nach Anspruch 1, **dadurch gekennzeichnet, dass** die lösbare Kupplung eine Klauenkupplung (34) ist.

11. Maschine nach einem der Ansprüche 1 oder 10, **dadurch gekennzeichnet, dass** die Kupplung (34) selbsttätig mit der Verschiebebewegung (H) der Arbeitseinheit (2) lösbar und/oder schließbar ist.

12. Maschine nach einem der Ansprüche 1 bis 11, **dadurch gekennzeichnet, dass** die lösbare Kupplung (34) ansteuerbar betätigbar ist.

13. Maschine nach einem der Ansprüche 1 bis 12, **dadurch gekennzeichnet, dass** die Arbeitseinheit (2) hubfähig ist.

14. Maschine nach einem der vorgenannten Ansprüche 1 bis 13, **dadurch gekennzeichnet, dass** die Maschine eine Erntemaschine ist.

15. Maschine nach einem der Ansprüche 1 bis 14, **dadurch gekennzeichnet, dass** die Maschine eine Aufnahmevorrichtung (2) für am Boden liegendes Erntegut ist.

16. Maschine nach einem der Ansprüche 1 bis 15, **dadurch gekennzeichnet, dass** die verschiebbare Arbeitseinheit (2) eine linear hubfähige, zentrale Fronteinheit ist.

## Claims

1. An agricultural machine, in particular for front mounting to an agricultural vehicle, comprising at least one drive unit (2, 3) which is displaceable with respect to a drive source (30), **characterised in that** the displaceable drive unit (2, 3) is displaceable between a transport position and a working position by translatory or linear movement and is in the form of a linearly liftable central middle unit (3), wherein there are provided two pivotable side units (4, 5), and that for bridging over the translatory or linear movement of the drive unit (2, 3) between a transport position and a working position on the one hand the drive source (30) has a drive shaft (38) in the direction of displacement (H) of the drive unit (2, 3) and there is provided a releasable coupling (34) between the drive unit (2, 3) and the drive source (30), and on the other hand there is provided a variable-length jointed shaft (25) arranged transversely relative to the intended direction of travel (F).

2. A machine according to claim 1 **characterised in that** the drive source is provided laterally of the central axis of the drive unit (24) and the jointed shaft (25) extends on to the side of the central axis, that is in opposite relationship to the drive source (24).

3. A machine according to one of the preceding claims **characterised in that** there is provided a second jointed shaft which is coupled to the first jointed shaft and which extends back to the side of the drive source.

4. A machine according to one of the preceding claims **characterised in that** both jointed shafts are coupled by way of a transmission.

5. A machine according to one of the preceding claims **characterised in that** the transmission is displaceable during the displacement of the drive unit.

6. A machine according to one of the preceding claims **characterised in that** the drive unit (2) is liftable.

7. A machine according to one of the preceding claims **characterised in that** the machine is a harvester.

8. A machine according to one of the preceding claims **characterised in that** the machine is a pick-up device (2) for crop material lying on the ground.

9. A machine according to one of the preceding claims **characterised in that** the displaceable drive unit (2) is a linearly liftable central front unit.

10. A machine according to claim 1 **characterised in that** the releasable coupling is a dog coupling (34).

11. A machine according to one of claims 1 or 10 **characterised in that** the coupling (34 is releasable and/or closable automatically with the displacement movement (H) of the drive unit (2).

12. A machine according to one of claims 1 to 11 **characterised in that** the releasable coupling (34) is controllably actuable.

13. A machine according to one of claims 1 to 12 **characterised in that** the drive unit (2) is liftable.

14. A machine according to one of claims 1 to 13 **characterised in that** the machine is a harvester.

15. A machine according to one of claims 1 to 14 **characterised in that** the machine is a pick-up device (2) for crop material lying on the ground.

16. A machine according to one of claims 1 to 15 **characterised in that** the displaceable drive unit (2) is a linearly liftable central front unit.

## Revendications

1. Machine agricole, en particulier destinée au montage frontal sur un véhicule agricole, comportant au moins une unité de travail (2, 3) mobile par rapport à une source d'entraînement (30), **caractérisée en ce que** l'unité de travail mobile (2, 3) peut être déplacée par un mouvement de translation ou linéaire entre une position de transport et une position de travail et est conçue comme une unité centrale (3) capable d'effectuer un mouvement de levage linéaire, deux unités latérales pivotantes (4, 5) étant prévues, et **en ce que**, pour désactiver le mouvement de translation ou linéaire de l'unité de travail (2, 3) entre une position de transport et une position de travail, d'une part la source d'entraînement (30) comporte un arbre d'entraînement (38) dans la direction de déplacement (H) de l'unité de travail (2, 3) et un accouplement débrayable (34) est prévu entre l'unité de travail (2, 3) et la source d'entraînement (30), d'autre part un arbre articulé (25) de longueur variable, disposé transversalement à la direction de marche prévue (F), est prévu.

2. Machine selon la revendication 1, **caractérisée en ce que** la source d'entraînement est disposée latéralement à l'axe médian de l'unité d'entraînement (24), et l'arbre articulé (25) s'étend du côté de l'axe médian opposé à celui de la source d'entraînement (24).

3. Machine selon une des revendications précédentes, **caractérisée en ce qu'**il est prévu un deuxième arbre articulé qui est couplé au premier arbre articulé et qui s'étend en retour vers le côté de la source d'entraînement.

4. Machine selon une des revendications précédentes, **caractérisée en ce que** les deux arbres articulés sont couplés par un engrenage.

5. Machine selon une des revendications précédentes, **caractérisée en ce que** l'engrenage est mobile pendant le déplacement de l'unité de travail.

6. Machine selon une des revendications précédentes, **caractérisée en ce que** l'unité de travail (2) est capable d'effectuer un mouvement de levage.

7. Machine selon une des revendications précédentes, **caractérisée en ce que** la machine est une moissonneuse.

8. Machine selon une des revendications précédentes **caractérisée en ce que** la machine est un dispositif de ramassage (2) d'un produit de récolte reposant sur le sol.

9. Machine selon une des revendications précédentes, **caractérisée en ce que** l'unité de travail mobile (2) est une unité frontale centrale capable d'effectuer un mouvement de levage linéaire.

10. Machine selon la revendication 1, **caractérisée en ce que** l'accouplement débrayable est un accouplement à griffes (34).

11. Machine selon une des revendications 1 ou 10, **caractérisée en ce que** l'accouplement (34) peut être débrayé et/ou fermé automatiquement avec le mouvement de déplacement (H) de l'unité de travail (2).

12. Machine selon une des revendications 1 à 11, **caractérisée en ce que** l'accouplement débrayable (34) peut être actionné de manière commandée.

13. Machine selon une des revendications 1 à 12, **caractérisée en ce que** l'unité de travail (2) est capable d'effectuer un mouvement de levage.

14. Machine selon une des revendications précédentes 1 à 13, **caractérisée en ce que** la machine est une moissonneuse.

15. Machine selon une des revendications 1 à 14, **caractérisée en ce que** la machine est un dispositif de ramassage (2) d'un produit de récolte reposant sur le sol.

16. Machine selon une des revendications 1 à 15, **caractérisée en ce que** l'unité de travail mobile (2) est une unité frontale centrale capable d'effectuer un mouvement de levage linéaire.
